# EUROPEAN PATENT SPECIFICATION

(11) **EP 0 663 553 B1**
(45) Date of publication and mention of the grant of the patent: **01.09.1999**
(21) Application number: 95100263.3
(22) Date of filing: 10.01.1995
(51) Int. Cl.: F16K 37/00, F04B 49/02, F04D 15/00, F04D 15/02, E03B 5/02

(54) **Device for water distribution system**
Vorrichtung für Wasserversorgungssystem
Dispositif pour système de distribution d'eau

(30) Priority: 14.01.1994 IT PD940004
(43) Date of publication of application: 19.07.1995
(73) Proprietor: Dab Pumps S.p.A., 35035 Mestrino (Padova) (IT)
(72) Inventor: Sinico, Francesco, I-36075 Montecchio Maggiore (Vicenza) (IT)
(74) Representative: Modiano, Guido, Dr.-Ing.

(56) References cited:
- EP-A- 0 233 554
- WO-A-85/01994
- FR-A- 2 092 270
- GB-A- 2 040 406
- US-A- 3 667 495
- US-A- 3 865 512
- US-A- 4 180 374
- US-A- 4 344 741

## Description

The present invention relates to a device for controlling a water distribution system.

Hydraulic systems in which water is distributed with the aid of at least one pump currently use devices created by assembling commercially available components that activate and deactivate said pump with the aid of a pressure switch which cooperates with a flow-controlled switch.

The pressure switch has the purpose of operating the pump when there is no demand on the part of the users but there is still water consumption due to losses such as dripping of the dispensers; the flow-controlled switch has the purpose of operating the pump if the users dispense more than a preset flow-rate.

The types of construction of flow-controlled switches installed in control devices currently include a sensor element which is articulated to a fulcrum axis and is located directly in the region where the water flows out of the pump.

The sensor element acts directly on a contact that activates the pump control circuit.

However, this type of flow-controlled switch is scarcely sensitive to low flow-rates, and the sensor element located in the flow region hinders said flow at high flow-rates.

Another type of flow-controlled switch that is currently in widespread use and is more sensitive than the preceding type at low flow-rates includes a sensor element that is axially movable in the flow region; accordingly, even at full throttle said element is a considerable obstacle to said flow with consequent considerable load losses.

An example of such a device can be found in EP-A-0 233 554 which discloses a device for controlling a water distribution system comprising a valve body having an inlet and outlet for fluid flow along the longitudinal axis of the valve body, a magnet guided in the valve body which acts as a position-indicating element in cooperation with an external transducer (Reed bulb) connected to a control circuit which activates or deactivates a pump, and an elastic contrast element (spring) acting being the position-indicating element and an abutment step in the valve body, wherein the position-indicating element is slidable along the axis under the thrust of the discharge flow of the pump and in the other direction under the thrust of the spring.

The aim of the present invention is to provide a device for controlling a water distribution system that eliminates the above described drawbacks of flow-controlled switches in known types.

Within the scope of this aim, a consequent primary object is to provide a control device in which the flow-controlled switch also acts as support and connection component for the other components.

Another important object is to provide an efficient and reliable device.

Another object is to provide a control device that can be manufactured with conventional equipment and systems.

This aim, these objects, and others which will become apparent hereinafter are achieved by a device for controlling a water distribution system comprising a manifold having an inlet connector and at least one outlet connector for fluid flow, said manifold comprising an internal body comprising a position-indicating element and an internal seat defining an axial direction along which said internal body is guided by said seat so that it is slideable in one direction under the thrust of liquid flow through said seat and in the opposite direction under the thrust of an elastic contrast element within said manifold, said position-indicating element being capable of cooperating with an external transducer, characterized in that said at least one outlet connector is situated laterally with respect to said axial direction, said internal body being slideable between a position that is upstream of said at least one outlet connector and a position beyond the flow region from the inlet connector to the at least one outlet connector.

Further characteristics and advantages of the invention will become apparent from the following detailed description of two embodiments thereof, illustrated only by way of non-limitative example in the accompanying drawings, wherein:
figure 1 is a view of the control device in a first embodiment, mounted on a pump;
figure 2 is a partially sectional enlarged-scale detail view of the control device of figure 1;
figure 3 is a sectional view of a second embodiment of the control device.

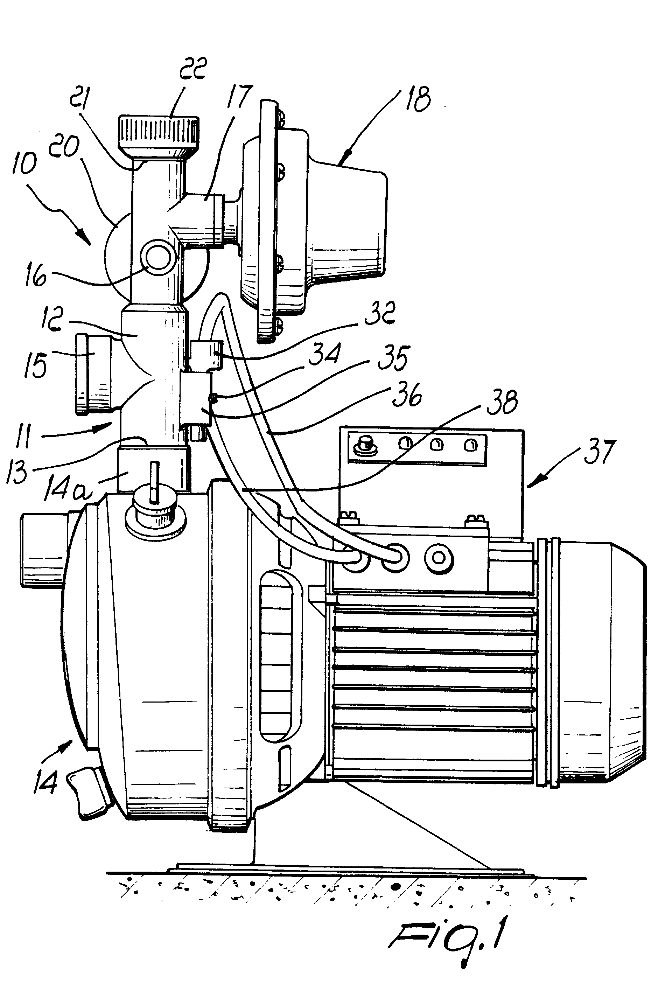

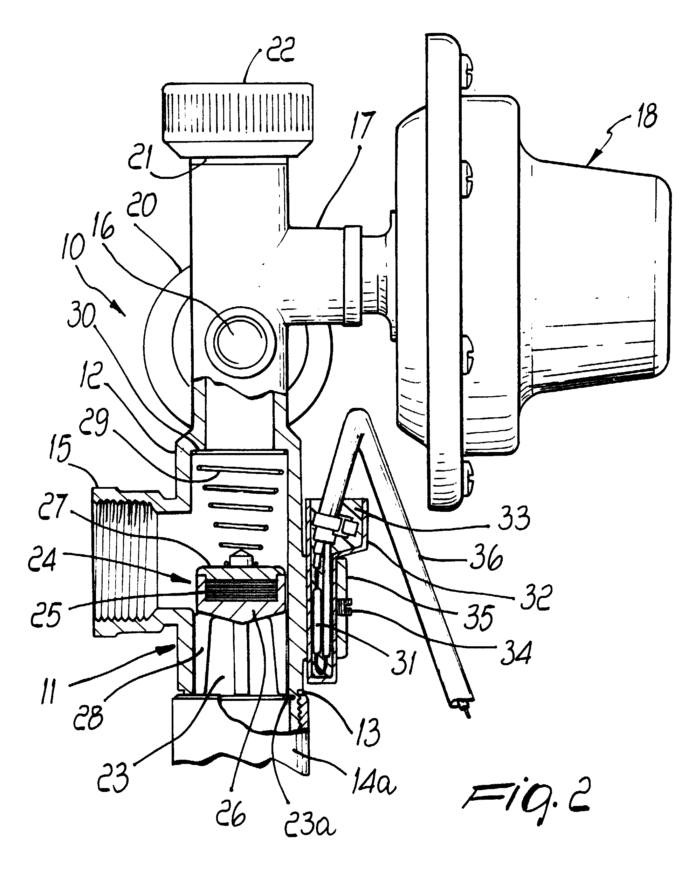

With reference to the above mentioned figures 1 and 2, in a first embodiment a device for controlling a water distribution system is generally designated by the reference numeral 10 and comprises a manifold 11 with a tubular body 12 that has, in succession: a first axial connector 13, which connects it to the discharge outlet 14a of a centrifugal pump 14; a second radial connector 15 for at least one user which is not shown; a third radial connector 16 for a pressure gauge, also not shown; a fourth radial connector 17 for an expansion tank of a per se known type generally designated by the reference numeral 18; a fifth radial connector, which is not shown in the figures, for a pressure switch 20 which is also of a per se known and commonly commercially available type, and a sixth terminal axial connector 21, which is closed by a plug 22 and can be used for priming.

All the connectors except the first one are internally threaded.

The manifold 11 is conveniently arranged vertically with the plug 22 at the top.

According to the invention, a flow-controlled switch is integrated in the lower region of the manifold 11 and is composed of a cylindrical seat 23 in which a body 24 is retained so that it can slide axially; said body internally encloses a position-indicating element such as a magnet 25.

In particular, the body 24 is composed of a box-like element 26 with the seat for the magnet 25 and by a closure lid 27 which is connected to the element 26.

The element 26 is extended towards the discharge outlet of the pump by four longitudinal guiding feet 28 which are adjacent to the wall of the seat 23.

The ends of the feet 28 rest on an elastic ring 23a for bores that delimits the seat 23 on one side and is inserted in an appropriate annular groove.

The body 24 is pushed in one direction by the discharge flow of the pump 14 and in the other direction by a spring 29 which is arranged between said body and an abutment step 30 that is formed at the corresponding end of the seat 23.

The second connector 15 for the users leads into the region where the body 24 slides.

In particular, the second connector 15 is arranged so that when the pump is delivering its maximum flow-rate the body 24 moves fully beyond the flow region, packing the spring 29 and thus causing no hindrance.

The maximum diameter of the body 24 is such that when the spring 29 is fully extended said body, being located upstream of the second connector 15, in any case allows liquid to seep.

An external transducer cooperates with said magnet 25 and is advantageously constituted by a Reed bulb 31 which is accommodated in an elongated capsule 32 and is embedded in epoxy resin 33 inside said capsule.

The capsule 32 is inserted and locked by means of a grub screw 34 in an eyelet 35 formed longitudinally in the body 12 of the manifold 11 at the region where the magnet 25 passes.

The Reed bulb 31 is directly connected by means of a cable 36 to the control circuit, not shown in the figures, of the pump 14; the circuit is conveniently accommodated within the terminal box 37 of said pump.

The pressure switch 20 is also connected to the control circuit of the pump 14 by means of a cable 38.

As regards operation, when the users dispense no flow, the pump 14 is operated by the pressure switch 20 when the expansion tank, due to dripping or small leaks of the system, reaches a preset minimum internal pressure.

The pump is operated to restore the maximum pressure conditions inside the expansion tank.

During this step, with flow-rates of less than for example three liters per minute there is a slight axial movement of the body 24 so as to allow the reduced flow to pass.

When the user is opened, the pressure inside the expansion tank 18 decreases and causes the activation of the pump; said pump sends a flow that is such as to considerably move the magnet 25, until the spring 29 is packed at full throttle.

The movement of the magnet 25 closes the contact of the Reed ampoule 31 and keeps the pump 14 active continuously until the user closes.

During this step, the pressure switch 20, which would operate by continuously engaging and disengaging the pump 14, is bypassed.

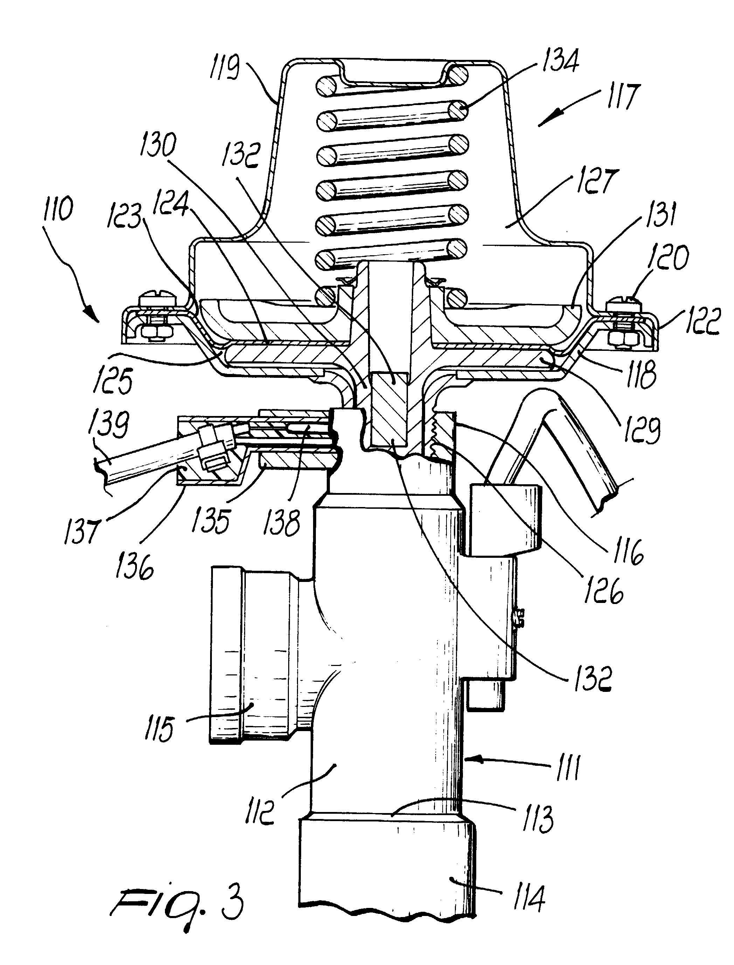

With reference now to the above described figure 3, in a second embodiment the control device is generally designated by the reference numeral 110 and comprises a manifold 111 which is composed of a tubular body 112 that has in succession: a first axial connector 113 for the discharge outlet 114 of a pump; a second radial connector 115 for the users; a third radial connector, not shown in the figures, for a pressure gauge; and a fourth axial connector 116 for an expansion tank which is generally designated by the reference numeral 117.

All the connectors are threaded.

Priming can be performed by unscrewing the expansion tank 117.

In particular, the expansion tank 117 comprises two parts made of stamped metal plate that have a circular plan and are respectively designated by the reference numerals 118 and 119; said parts are joined along their perimeter by means of bolts 120 at perimetric bands, respectively 121 and 122, between which the edge 123 of an elastic membrane is gripped; said membrane divides the inside into a first region 125 which is connected to the inside of the manifold 111 by means of the connector 126 connected to the corresponding part 118.

The central part of membrane 124 is enclosed between a first disk-like element 129, which is located in the first region 125 and continues axially with a cup-shaped protrusion 130 that passes through said membrane 124 in a suitable central hole thereof, and a second disk-like element 131, which is also provided with a hole in which the protrusion 130 enters.

A position-indicating element 132 is located inside the protrusion 130 and is constituted by a disk-shaped magnet inserted therein.

A cylindrical helical contrast spring 134 is placed between the second disk-like element 131 and the part 119 of the tank 117.

A transverse eyelet 135 is rigidly coupled to the fourth axial connector 116, and a capsule 136 is inserted therein; a Reed bulb 138 of the same type as the preceding one 31 is placed inside the capsule 136, is embedded in resin 137, and is connected to the pump control board (not shown) by means of a cable 139.

The magnet 132, in combination with the Reed bulb 138, forms a pressure switch that is integrated between the expansion tank 137 and the manifold 111.

A flow-controlled switch that is equivalent to the one described in the first embodiment is contained in the main body 112 of the manifold 111.

In practice it has been observed that in both embodiments the invention achieves the intended aim and objects.

The invention thus conceived is susceptible of numerous modifications and variations, all of which are within the scope of the inventive concept.

All the details may furthermore be replaced with other technically equivalent elements.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Device for controlling a water distribution system comprising a manifold (11, 111) having an inlet connector (13) and at least one outlet connector (15) for fluid flow, an internal body (24) with a position-indicating element (25) and an internal seat (23) defining an axial direction along which said internal body (24) is guided by said seat so that it is slideable in one direction under the thrust of liquid flow through said seat (23) and in the opposite direction under the thrust of an elastic contrast element (29) within said manifold (11, 111), said position-indicating element (25) being capable of cooperating with an external transducer (31), characterized in that said at least one outlet connector (15) is situated laterally with respect to said axial direction, said internal body (24) being slideable between a position that is upstream of said at least one outlet connector (15) and a position beyond the flow region from the inlet connector (13) to the at least one outlet connector (15).

2. Device according to claim 1, characterized in that said position-indicating element (25) is constituted by a magnet.

3. Device according to claim 2, characterized in that said internal body (24) is composed of a box-like element (26) and of a lid (27) enclosing said position-indicating element (25), longitudinal feet (28) for guiding said internal body (24) by said seat (23), said feet extending from said box-like element (26).

4. Device according to claim 3, characterized in that the outside diameter of said internal body (24) is such as to leave a fluid seepage space between said internal body (24) and said seat (23).

5. Device according to claims 3 and 4, characterized in that said internal body (24) rests downwardly with said feet (28) on a ring (23a) which is seated in a corresponding groove of said manifold (11).

6. Device according to claim 1, characterized in that said elastic contrast element (29) is constituted by a spring that is interposed between said position-indicating element (25) and an abutment step (30) which is formed in said seat (23).

7. Device according to claim 1 further comprising at least one pump, at least one expansion tank (18, 117), at least one pressure switch connected to said manifold (11, 111), said pressure switch operating a control circuit of said pump, and a transducer (31) located outside said manifold (11, 111) for cooperating with said position-indicating element (25), said transducer (31) being connected with said control circuit of said pump for activating and respectively deactivating said pump.

8. Device according to claim 7, characterized in that said external transducer is constituted by a Reed bulb (31).

9. Device according to claim 8, characterized in that said Reed bulb (31) is embedded in resin (33) inside a capsule (32) that is inserted and fixed inside an eyelet (35) which is located on the outside of said manifold (11) at the region where said position-indicating element (25) slides.

10. Device according to claim 7, characterized in that said pressure switch is integrated between said expansion tank (117) and said manifold (111) and has a position-indicating element (132) which is located in said expansion tank (117), is movable together with a membrane (124) that lies inside said tank, and cooperates with a second external transducer (138) which is fixed to said manifold (111).

11. Device according to claim 10, characterized in that said position-indicating element (132) in said expansion tank (117) is a magnet.

12. Device according to claim 11, characterized in that said magnet (132) is enclosed in a seat (130) which is located at the center region of said membrane (124) and is formed between elements (129,131) that enclose the non-peripheral part of said membrane (124).

13. Device according to claim 10, characterized in that said second external transducer (138) is constituted by a Reed bulb.

14. Device according to claim 13, characterized in that said Reed bulb (138) is embedded in resin (137) inside a capsule (136) that is inserted and locked within an eyelet (135) that is monolithic with said manifold (111) in a region that lies close to said expansion tank (117) and thus to said magnet (132).

## Patentansprüche

1. Vorrichtung zum Steuern eines Wasserverteilsystems mit einem Verteiler (11, 111) mit Eintrittsanschluß (13) und mindestens einem Austrittsanschluß (15) für Fluidströmung, einem Innenkörper (24) mit einem Positionsanzeigeelement (25) und einem Innensitz (23), der eine axiale Richtung definiert, längs der der Innenkörper (24) an dem Sitz so geführt ist, daß er unter der Schubwirkung von Fluidströmung durch den Sitz (23) hindurch in einer Richtung verschiebbar ist und in der entgegengesetzten Richtung unter der Schubwirkung eines elastischen Gegenelements (29) in dem Verteiler (11, 111) verschiebbar ist, wobei das Positionsanzeigeelement (25) zum Zusammenarbeiten mit einem externen Wandler (31) geeignet ist, dadurch **gekennzeichnet**, daß der mindestens eine Austrittsanschluß (15) quer zu der axialen Richtung angeordnet ist, und daß der Innenkörper (24) zwischen einer Position stromaufwärts des mindestens einen Austrittsanschlusses (15) und einer Position nach dem Strömungsabschnitt von dem Eintrittsanschluß (13) zu dem mindestens einen Austrittsanschluß (15) verschiebbar ist.

2. Vorrichtung nach Anspruch 1, dadurch **gekennzeichnet**, daß das Positionsanzeigeelement (25) ein Magnet ist.

3. Vorrichtung nach Anspruch 2, dadurch **gekennzeichnet**, daß der Innenkörper (24) aus einem kastenartigen Element (26) und einem Deckel (27) zum Einschluß des Positionsanzeigeelements (25) sowie Längsfüßen (28) zum Führen des Innenkörpers (24) an dem Sitz (23) besteht, die von dem kastenartigen Element (26) ausgehen.

4. Vorrichtung nach Anspruch 3, dadurch **gekennzeichnet**, daß der Außendurchmesser des Innenkörpers (24) so bemessen ist, daß ein Fluiddurchtrittsraum zwischen dem Innenkörper (24) und dem Sitz (23) besteht.

5. Vorrichtung nach Anspruch 3 und 4, dadurch **gekennzeichnet**, daß der Innenkörper (24) mit den Füßen (28) abwärts auf einem Ring (23a) steht, der in einer Nut des Verteilers (11) sitzt.

6. Vorrichtung nach Anspruch 1, dadurch **gekennzeichnet**, daß das elastische Gegenelement (29) eine Feder zwischen dem Positionsanzeigeelement (25) und einer Anlagestufe (30) in dem Sitz (23) ist.

7. Vorrichtung nach Anspruch 1, ferner umfassend mindestens eine Pumpe, mindestens einen Expansionstank (18, 117), mindestens einen mit dem Verteiler (11, 111) verbundenen Druckschalter zum Betätigen einer Steuerschaltung der Pumpe und einen Wandler (31) außerhalb des Verteilers (11, 111) zum Zusammenarbeiten mit dem Positionsanzeigeelement (25), der mit der Steuerschaltung der Pumpe zu deren Aktivieren bzw. Deaktivieren verbunden ist.

8. Vorrichtung nach Anspruch 7, dadurch **gekennzeichnet**, daß der externe Wandler ein Reed-Kontakt (31) ist.

9. Vorrichtung nach Anspruch 8, dadurch **gekennzeichnet**, daß der Reed-Kontakt (31) in Kunstharz (33) in einer Kapsel (32) eingebettet ist, die in eine Tasche (35) eingesetzt und darin fixiert ist, welche sich an der Außenseite des Verteilers (11) in dem Bereich befindet, wo das Positionsanzeigeelement (25) verschiebbar ist.

10. Vorrichtung nach Anspruch 7, dadurch **gekennzeichnet**, daß der Druckschalter zwischen dem Expansionstank (117) und dem Verteiler (111) integriert ist und ein Positionsanzeigeelement (132) in dem Expansionstank (117) hat, das gemeinsam mit einer in dem Tank liegenden Membran (124) beweglich ist und mit einem zweiten externen Wandler (138) zusammenarbeitet, der an dem Verteiler (111) befestigt ist.

11. Vorrichtung nach Anspruch 10, dadurch **gekennzeichnet**, daß das Positionsanzeigeelement (132) in dem Expansionstank (117) ein Magnet ist.

12. Vorrichtung nach Anspruch 11, dadurch **gekennzeichnet**, daß der Magnet (132) in einem Sitz (130) eingeschlossen ist, der sich im mittleren Bereich der Membran (124) befindet und zwischen Elementen (129, 131) gebildet ist, die den nicht zum Umfang gehörenden Teil der Membran (124) einschließen.

13. Vorrichtung nach Anspruch 10, dadurch **gekennzeichnet,** daß der zweite externe Wandler (138) ein Reed-Kontakt ist.

14. Vorrichtung nach Anspruch 13, dadurch **gekennzeichnet,** daß der Reed-Kontakt (138) in Kunstharz in einer Kapsel (136) eingebettet ist, die in eine Tasche (135) eingesetzt und darin fixiert ist, welche mit dem Verteiler (111) in einem Bereich monolithisch ausgebildet ist, der nahe dem Expansionstank (117) und damit dem Magneten (132) liegt.

## Revendications

1. Dispositif pour contrôler un système de distribution d'eau, comprenant un collecteur (11, 111) muni d'un connecteur d'entrée (13) et d'au moins un connecteur de sortie (15) pour l'écoulement du fluide, d'un corps intérieur (24) présentant un élément indicateur de position (25) et une portée ou siège intérieur(e) (23) définissant une direction axiale le long de laquelle ledit corps intérieur (24) est guidé par ladite portée de telle façon qu'il soit susceptible de coulisser dans une direction sous l'effet de la poussée de l'écoulement du liquide à travers ladite portée (23) et dans la direction opposée, sous l'effet de la poussée d'un élément élastique de rappel (29) à l'intérieur dudit collecteur (11, 111), ledit élément indicateur de position (25) étant capable de coopérer avec un transducteur extérieur (31), caractérisé en ce que ledit au moins un connecteur de sortie (15) est situé latéralement par rapport à ladite direction axiale, ledit corps intérieur (24) étant susceptible de coulisser entre une position qui est en amont dudit au moins un connecteur de sortie (15) et une position située au-delà de la zone d'écoulement depuis le connecteur d'entrée (13) jusqu'à le au moins un connecteur de sortie (15).

2. Dispositif selon la revendication 1, caractérisé en ce que ledit élément indicateur de position (25) est constitué par un aimant.

3. Dispositif selon la revendication 2, caractérisé en ce que ledit corps intérieur (24) est composé d'un élément formant boîte (26) et d'un couvercle (27) entourant ledit élément indicateur de position (25), et de pieds longitudinaux (28) pour faire guider ledit corps intérieur (24) par ladite portée (23), lesdits pieds s'étendant à partir dudit élément en caisson (26).

4. Dispositif selon la revendication 3, caractérisé en ce que le diamètre extérieur dudit corps intérieur (24) est tel qu'il laisse libre un espace de passage étroit de fluide entre ledit corps intérieur (24) et ladite portée (23).

5. Dispositif selon les revendications 3 et 4, caractérisé en ce que ledit corps intérieur (24) repose vers le bas par lesdits pieds (28) sur une bague (23a) qui est logée dans une gorge correspondante dudit collecteur (11).

6. Dispositif selon la revendication 1, caractérisé en ce que ledit élément élastique de rappel (29) est constitué par un ressort qui est interposé entre ledit élément indicateur de position (25) et un gradin de butée (30) qui est formé dans ladite portée (23).

7. Dispositif selon la revendication 1, comprenant en outre : au moins une pompe, au moins un réservoir d'expansion (18, 117), au moins un commutateur à pression relié audit collecteur (11, 111), ledit commutateur à pression actionnant un circuit de contrôle de ladite pompe, et un transducteur (31) disposé à l'extérieur dudit collecteur (11, 111) pour coopérer avec ledit élément indicateur de position (25), ledit transducteur (31) étant relié audit circuit de contrôle de ladite pompe pour activer et respectivement désactiver ladite pompe.

8. Dispositif selon la revendication 7, caractérisé en ce que ledit transducteur extérieur est constitué par une capsule de Reed (31).

9. Dispositif selon la revendication 8, caractérisé en ce que ladite capsule de Reed est noyée dans de la résine (33) à l'intérieur d'une enveloppe (32) qui est insérée et fixée à l'intérieur d'un oeillet (35) qui est disposé à l'extérieur dudit collecteur (11) dans la zone où coulisse ledit élément indicateur de position (25).

10. Dispositif selon la revendication 7, caractérisé en ce que ledit commutateur à pression est intégré entre ledit réservoir d'expansion (117) et ledit collecteur (111) et comporte un élément indicateur de position (132) qui est disposé dans ledit réservoir d'expansion (117), qui est susceptible de se déplacer avec une membrane (124) qui est placée à l'intérieur dudit réservoir, et qui coopère avec un deuxième transducteur extérieur (138) qui est fixé audit collecteur (111).

11. Dispositif selon la revendication 10, caractérisé en ce que ledit élément indicateur de position (132) dans ledit réservoir d'expansion (117) est un aimant.

12. Dispositif selon la revendication 11, caractérisé en ce que ledit aimant (132) est logé dans un réceptacle (130) qui est situé dans la région centrale de ladite membrane (124) et qui est formé entre des éléments (129, 131) qui entourent la partie non périphérique de ladite membrane (124).

13. Dispositif selon la revendication 10, caractérisé en ce que ledit deuxième transducteur extérieur (138) est constitué par une capsule de Reed.

14. Dispositif selon la revendication 13, caractérisé en ce que ladite capsule de Reed (138) est noyée dans de la résine (137) à l'aide d'une enveloppe (136) qui est insérée et bloquée à l'intérieur d'un oeillet (135) qui est monobloc avec ledit collecteur (111) dans une zone proche dudit réservoir d'expansion (117) et par conséquent dudit aimant (132).
